# EUROPÄISCHE PATENTSCHRIFT

(11) **EP 1 723 393 B1**
(45) Veröffentlichungstag und Bekanntmachung des Hinweises auf die Patenterteilung: **02.01.2008**
(21) Anmeldenummer: 05733628.1
(22) Anmeldetag: 07.03.2005
(51) Int. Cl.: G01D 5/20

(54) **BERÜHRUNGSLOS ARBEITENDES WEGMESSSYSTEM**
CONTACTLESS DISPLACEMENT MEASURING SYSTEM
SYSTEME DE MESURE DE DEPLACEMENT FONCTIONNANT SANS CONTACT

(30) Priorität: 08.03.2004 DE 102004011535; 24.08.2004 DE 102004041107
(43) Veröffentlichungstag der Anmeldung: 22.11.2006
(73) Patentinhaber: Micro-Epsilon Messtechnik GmbH & Co. KG, 94496 Ortenburg (DE)
(72) Erfinder: SELLEN, Martin, 94496 Ortenburg (DE); MEDNIKOV, Felix, 94496 Ortenburg (DE)
(74) Vertreter: Naumann, Ulrich
(86) Internationale Anmeldenummer: PCT/DE2005/000397
(87) Internationale Veröffentlichungsnummer: WO 2005/088257

(56) Entgegenhaltungen:
- EP-A- 0 238 922
- EP-A- 1 037 017
- DE-A1- 4 425 904
- US-A- 5 204 621
- US-B1- 6 605 939

## Beschreibung

Die Erfindung betrifft ein berührungslos arbeitendes Wegmesssystem mit einem mit Wechselstrom beaufschlagbaren, eine Messspule aufweisenden Sensor, einem dem Sensor zugeordneten Messobjekt, welches als Permanentmagnet ausgeführt ist und sich berührungslos entlang der in einem Spulengehäuse gekapselten Messspule bewegt, und einer mit dem Sensor verbundenen Auswerteelektronik.

Aus der EP 0 238 922 B1 ist ein magnetischer Wegsensor zur Erfassung der Lage eines Messobjekts bekannt, wobei der Wegsensor aus einem Differential-Transformator mit einem feststehenden Kern aus weichmagnetischem Material besteht. Als Messobjekt wird entlang des Kerns ein Dauermagnet bewegt, der den Kern positionsabhängig partiell magnetisch sättigt. An der Stelle, die der jeweiligen Position des Dauermagneten entspricht, wird somit ein virtueller Luftspalt in dem Kern wirksam wird, und als Folge daraus ändert sich die Kopplung zwischen den Wicklungen des Differentialtransformators. Diese Änderungen können mit bekannten elektronischen Schaltungen ausgewertet werden.

Ein ähnlicher Sensor ist aus der DE 44 25 904 A1 bekannt.

Bei den bekannten Wegensoren ist nachteilig, dass sie insgesamt zwei Wicklungen umfassen, nämlich zum einen eine Primärwicklung, die Erregerspule, die so angeordnet und an eine Wechselspannungsquelle angeschlossen ist, dass sie den weichmagnetischen Kern gegensinnig magnetisiert, und zum anderen eine Sekundärwicklung als eigentliche Messspule. Bei einem derartigen Magnetsystem bestehend aus Primär- und Sekundärspule ist insbesondere nachteilig, dass das Verhältnis zwischen Messbereich und Baulänge des Sensors relativ klein ausfällt. Hierdurch werden die Anwendungsmöglichkeiten derartiger Wegmesssysteme stark eingeschränkt.

Der vorliegenden Erfindung liegt nunmehr die Aufgabe zugrunde, ein berührungslos arbeitendes Wegmesssystem der eingangs genannten Art derart auszugestalten und weiterzubilden, dass das Verhältnis zwischen Messbereich und Baulänge des Sensors gegenüber den bekannten Wegmesssystemen optimiert ist. Außerdem soll die Auswertung und Aufbereitung der Messsignale auf einfache Weise zu realisieren sein.

Das erfindungsgemäße berührungslos arbeitende Wegmesssystem löst die voranstehende Aufgabe durch die Merkmale des Patentanspruchs 1. Danach ist ein solches Wegmesssystem dadurch gekennzeichnet, dass die Messspule mindestens zwei Spannungsabgriffe aufweist und einen Kern umfasst, welcher in einem wirksamen Bereich zwischen den Spannungsabgriffen lokal in Sättigung gebracht werden kann.

Erfindungsgemäß ist zunächst erkannt worden, dass für viele Anwendungen, bei denen Wege, beispielsweise Verschiebungen oder Hübe, berührungslos gemessen werden, kompakte Bauformen von großer Bedeutung sind, um die Wegmesssysteme auch in komplizierten Einbausituationen platzsparend einsetzen zu können. Darüber hinaus ist erkannt worden, dass eine kompakte Bauform einerseits und eine leichte Auswertbarkeit der Messsignale andererseits dadurch erreicht werden kann, dass die Messspule mindestens zwei Spannungsabgriffe aufweist und einen Kern umfasst, wobei der Kern in einem wirksamen Bereich zwischen den Spannungsabgriffen durch Anwesenheit des Permanentmagneten lokal in Sättigung gebracht werden kann. Die Wegerfassung erfolgt vorzugsweise durch Auswertung der Impedanzänderung der Messspule in Folge einer Sättigung des Kerns durch den Permanentmagneten in einem Bereich zwischen den Spannungsabgriffen.

In einer konkreten Ausführungsform ist der Kern aus einem weichmagnetischen kristallinen Material hergestellt. Aufgrund seiner hohen magnetischen Permeabilität bietet sich insbesondere der Einsatz von µ-Metall an. Denkbar ist auch eine Herstellung aus Vacoperm oder ähnlichen Materialien. Dabei könnte der Kern als runder Stab gefertigt werden, was es ermöglicht, die den Kern umfassende Messspule mit an sich bekannten Verfahren zu produzieren.

Vorzugsweise kann sich der Kern aus mehreren einzelnen Streifen zusammensetzen, wobei es sich im Konkreten um Streifen aus weichmagnetischem, kristallinem Material einerseits oder um Streifen aus nanokristallinem oder amorphem Material andererseits handeln kann. Die einzelnen Streifen können beispielsweise miteinander verklebt sein. Die miteinander verklebten Streifen können mit einer Isolierschicht versehen sein, um die eine einlagige Messspule gewickelt sein kann.

Die Trägerfrequenz, mit der die Messspule gespeist wird, beträgt bei einem Kern aus weichmagnetischem kristallinem bzw. nanokristallinem Material in der Praxis ca. 5 bis 20 kHz.

Im Rahmen einer alternativen Ausführungsform kann der Kern aus einem Kunststoff gebundenen ferromagnetischen Material hergestellt sein, wobei sich insbesondere Plastoferrit anbietet. Bei einem Kern aus ferromagnetischem Material können höhere Frequenzen zur Erregung der Messspule gewählt werden, die beispielsweise im Bereich von ca. 100 kHz liegen können. Mit einem derartigen Wegsystem lässt sich somit eine große Bandbreite abdecken.

Der Permanentmagnet kann unterschiedliche Formen aufweisen und kann beispielsweise als Stabmagnet oder als Ring ausgeführt sein. Eine Magnetisierung des Permanentmagneten ist sowohl in axialer als auch in radialer Richtung denkbar. In beiden Fällen entsteht in dem Luftspalt zwischen dem Permanentmagnet und dem Kern ein Magnetfeld. Dessen Stärke sollte ausreichend hoch sein, so dass ein wirksamer Bereich zwischen den Spannungsabgriffen der Messspule in Sättigung gebracht werden kann. Vorteilhaft ist dabei, dass eine Abstandsänderung zwischen dem Messobjekt und der Messspule einen kleinen Einfluss auf die Impedanz der Messspule hat.

Das Gehäuse, in dem die Messspule gekapselt ist, kann vorzugsweise aus einem leitfähigen, nicht ferromagnetischen Material, beispielsweise rostfreiem Stahl, aus Kunststoff oder aus Keramik hergestellt sein. In einer besonders bevorzugten Ausführung ist das Gehäuse aus Aluminium oder einer Aluminiumlegierung gefertigt, was zum einen den Vorteil einer kostengünstigen Herstellung mit sich bringt und zum anderen besonders effektiv als Abschirmung gegen hochfrequente Felder wirkt. Zur Vermeidung von Störungen bietet sich bei allen genannten Materialien an, die Wandstärke des Spulengehäuses größer als die Eindringtiefe des Wirbelstroms im jeweiligen Material zu wählen.

Die Erregung der Messspule könnte beispielsweise mit einer sinusförmigen Wechselspannung erfolgen. In besonders bevorzugter Weise wird die Messspule allerdings mit zwei komplementären bipolaren Rechteckspannungen gespeist, da ein Rechteckoszillator mit hochstabilisierter Amplitude und Frequenz einfach und preiswert zu realisieren ist. Denkbar ist auch die Erregung der Messspule durch zwei komplementäre unipolare Rechteckspannungen, wobei der konstante Spannungsanteil an der Messspule zur Temperaturkompensation genutzt werden kann.

Im Hinblick auf eine weitere Platzersparnis kann vorgesehen sein, dass der Kern als ein vorzugsweise zylinderförmiges Rohr ausgebildet ist, das mit mehreren Streifen aus weichmagnetischem Material umwickelt ist. Bei einer derartigen Ausführung ergibt sich die Möglichkeit, dass Messobjekt innerhalb des Rohres anzuordnen, so dass sich eine besonders kompakte Bauform realisieren ließe. Alternativ kann der Sensor auch entlang der Längsrichtung des Rohres an dessen Außenwand angebracht werden. Insbesondere kann bei einer Ausführung des Kerns als Rohr das Messobjekt als Schwimmer ausgeführt sein, was es beispielsweise ermöglicht, Flüssigkeitsstände innerhalb des Rohres zu überwachen.

Im Rahmen einer weiteren bevorzugten Weiterbildung sind der Kern und folglich auch die um den Kern gewickelte Messspule ringförmig ausgeführt. Das Messobjekt kann in der Mitte des Rings angeordnet werden, so dass anstelle rein linearer Bewegungen auch rotatorische Bewegungen erfasst werden können.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigt
- Fig. 1: ein Blockschaltbild eines ersten Ausführungsbeispiel eines erfindungsgemäßen berührungslos arbeitenden Wegmesssystems,
- Fig. 2: zwei schematische Ansichten eines Ausführungsbeispiel eines erfindungsgemäßen Wegmesssystems zur Messung der Bewegung von Zylinderkolben,
- Fig. 3: ein Blockschaltbild eines weiteren Ausführungsbeispiels eines erfindungsgemäßen Wegmesssystems,
- Fig. 4: ein Blockschaltbild eines Ausführungsbeispiels eines erfindungsgemäßen Wegmesssystems mit innerhalb der Messspule angeordnetem Messobjekt,
- Fig. 5: ein Blockschaltbild eines Ausführungsbeispiels eines erfindungsgemäßen Wegmesssystems mit einem als Schwimmer ausgeführten Messobjekt und
- Fig. 6: ein Blockschaltbild eines Ausführungsbeispiels eines erfindungsgemäßen Wegmesssystems zur Messung rotatorischer Bewegungen.

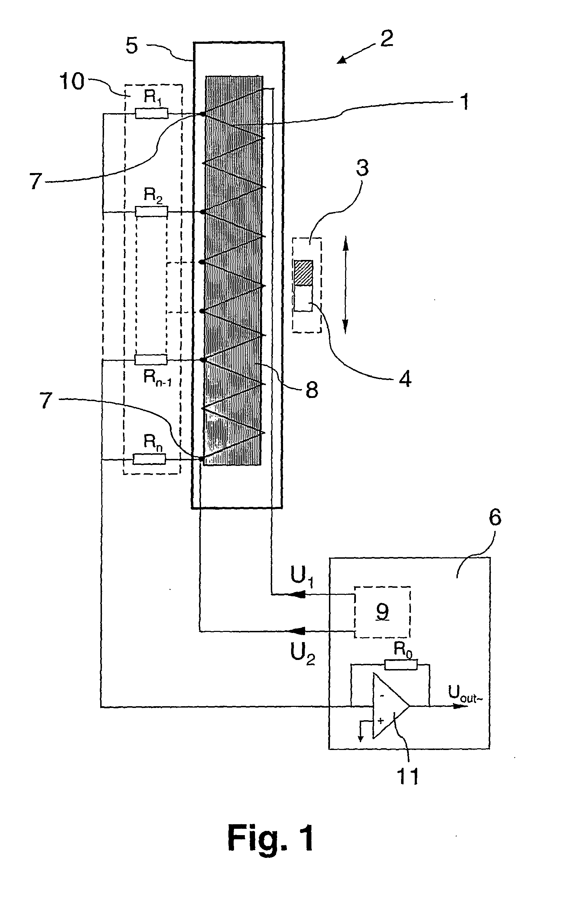

Fig. 1 zeigt in einem Blockschaltbild ein erstes Ausführungsbeispiel eines berührungslos arbeitenden Wegmesssystems mit einem mit Wechselstrom beaufschlagbaren, eine Messspule 1 aufweisenden Sensor 2, einem dem Sensor 2 zugeordnetem Messobjekt 3, welches als Permanentmagnet 4 ausgeführt ist oder einen Permanentmagneten 4 umfasst und sich berührungslos entlang der in einem Spulengehäuse 5 gekapselten Messspule 1 bewegt, und einer mit dem Sensor 2 verbundenen Auswerteelektronik 6. Die Messspule 1 umfasst insgesamt n Spannungsabgriffe 7 sowie einen Kern 8, der in einem wirksamen Bereich zwischen den Spannungsabgriffen 7 lokal in Sättigung gebracht werden kann.

Die Messspule 1 ist einlagig ausgeführt und ist zusammen mit dem Kern 8 in dem Gehäuse 5 gekapselt. Wie bereits erwähnt ist das als Permanentmagnet 4 ausgeführte Messobjekt 3 berührungslos entlang des Gehäuses 5 bewegbar. Der Kern 8 wird durch den Permanentmagneten 4 in Abhängigkeit von dessen Position gesättigt, was in einem Bereich zwischen den entsprechenden Abgriffen 7 zu einer mit Hilfe der Auswerteelektronik 6 erfassbaren Impedanzänderung führt.

Die Messspule 1 wird von einem Oszillator 9 mit zwei komplementären Spannungen U₁ und U₂ gespeist. Die zwischen den einzelnen Abgriffen 7 der Messspule 1 induzierten Spannungen werden mit Hilfe eines Netzwerkes 10 mit Widerständen R₁ bis Rₙ und eines Operationsverstärkers 11 mit Rückkopplungswiderstand R₀ addiert. Wenn sich der Permanentmagnet 4 in der Mitte oder Messspule 1 befindet, ist die Ausgangsspannung U_{out∼} gleich Null. Bei einer Verschiebung des Permanentmagneten 4 relativ zur Messspule 1 variiert die Ausgangsspannung U_{out∼} linear in Abhängigkeit von der jeweiligen Position des Permanentmagneten 4 bzw. Messobjekts 3 in Bezug auf die Messspule 1.

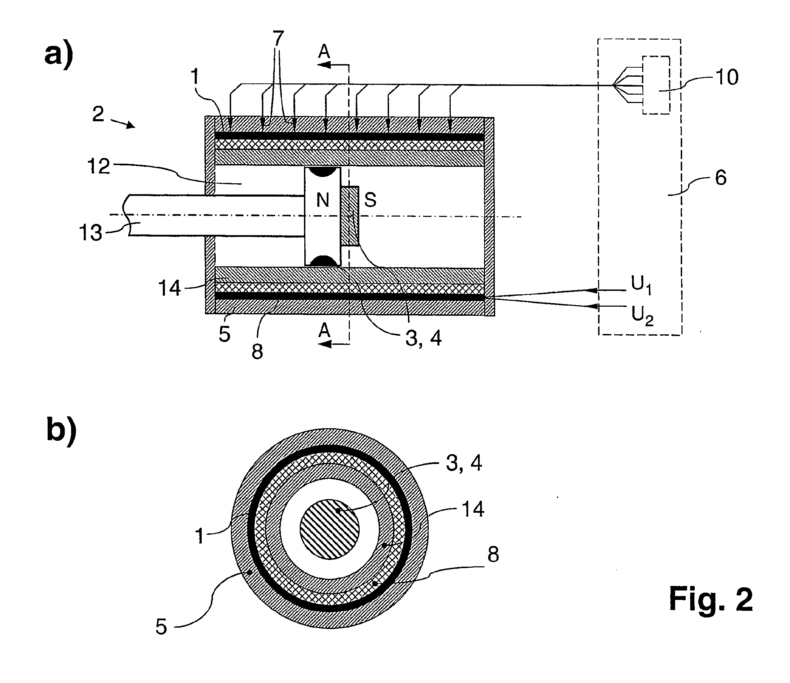

Fig. 2 zeigt schematisch ein Ausführungsbeispiel eines Wegmesssystems zur Ermittlung der Position eines innerhalb eines Zylinderraums 12 verschiebbaren Kolbens 13. Fig. 2 a) zeigt das Wegmesssystem in einer Seitenansicht, wohingegen Fig. 2 b) eine Schnittansicht entlang der Linie A-A darstellt. Der Zylinderraum 12 wird seitlich durch ein Rohr 14 begrenzt, welches an seiner Außenwand mit einer Schicht aus µ-Metall umwickelt ist. Zwischen der Schicht aus µ-Metall und einem äußeren Gehäuse 5 laufen die Wicklungen der Messspule 1, so dass das µ-Metall als Kern 8 für die Messspule 1 wirkt.

Die Messspule 1 wird von einem Oszillator mit zwei komplementären Spannungen U₁ und U₂ gespeist. Entlang der Messspule 1 ist eine Vielzahl von Spannungsabgriffen 7 vorgesehen. Die abgegriffenen Spannungen werden einer Auswerteelektronik 6 zugeführt, die ein lediglich schematisch angedeutetes Netzwerk 10 aus Widerständen umfasst. Die Auswertung der Spannungswerte und die Ermittlung der Position des Kolbens 13 erfolgt im Übrigen wie im Zusammenhang mit dem Ausführungsbeispiel gemäß Fig. 1 beschrieben.

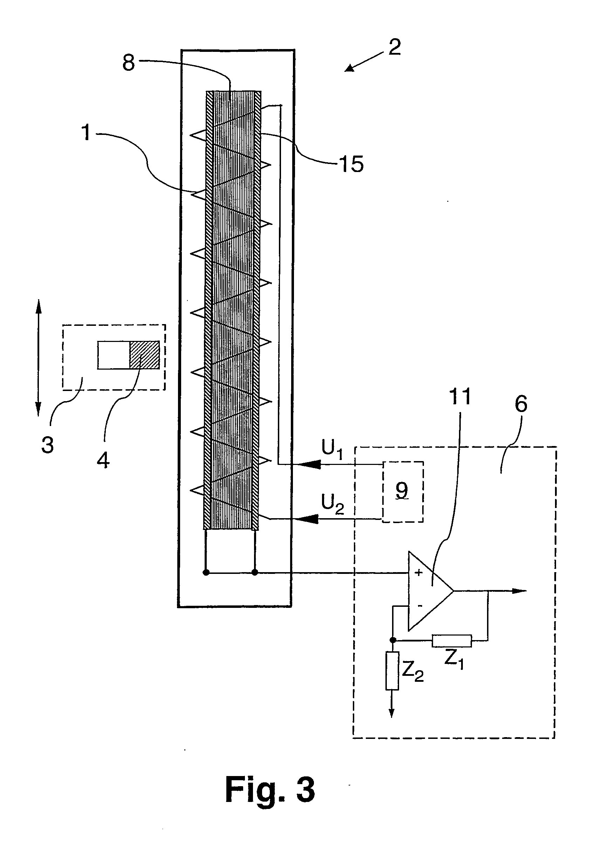

Fig. 3 zeigt ein Blockschaltbild eines weiteren Ausführungsbeispiels eines Wegmesssystems. Wie in der Ausführungsform gemäß Fig. 1 weist der Sensor 2 eine einlagige Messspule 1 auf, die einen Kern 8 aus weichmagnetischem Material umfasst. Im Unterschied zur ersten Ausführungsform ist der Kern 8 über seine gesamte Länge von einer dünnen Kupferfolie 15 umgeben. Dabei übernehmen die Kapazitäten zwischen der Messspule 1 und der Kupferfolie 15 dieselbe Rolle wie die Widerstände R₁ ... Rₙ in der Ausführung gemäß Fig. 1. Die Kupferfolie 15 hat eine direkte Verbindung mit dem nicht invertierenden Eingang eines Operationsverstärkers 11, dessen Verstärkungsfaktor mit Hilfe der Widerstände Z₁ und Z₂ eingestellt werden kann. Ein derartiges Wegmesssystem zeichnet sich durch eine relativ einfache und kostengünstige Herstellung aus.

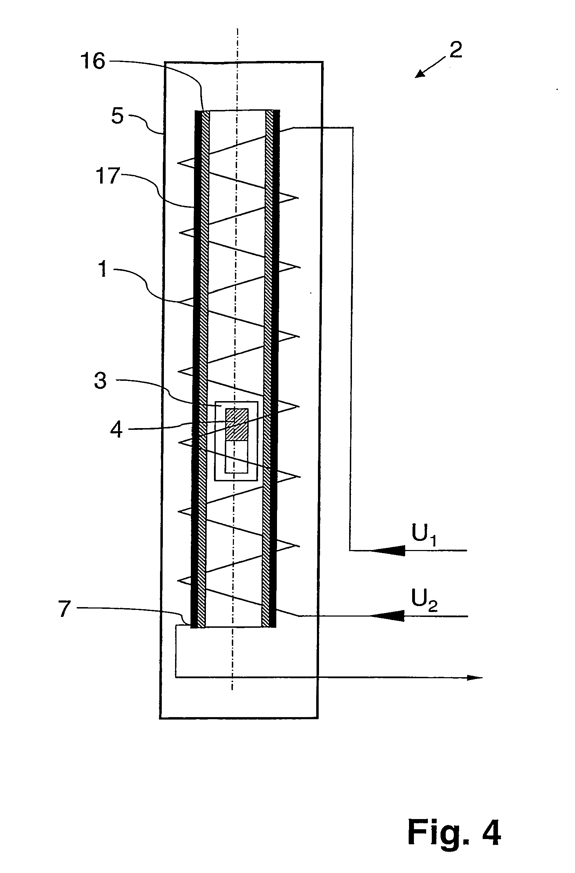

Fig. 4 zeigt schematisch ein Ausführungsbeispiel, bei dem das als Permanentmagnet 4 ausgeführte Messobjekt 3 im Inneren eines zylinderförmigen Rohres 16 bewegbar ist. Das Rohr 16, das mit mehreren Streifen 17 aus weichmagnetischem Material umwickelt ist, wird von der Messspule 1 umfasst. Wie bereits in Zusammenhang mit dem Ausführungsbeispiel gemäß Fig. 3 beschrieben, erfolgt der Spannungsabgriff 7 direkt an den Streifen 17, und die abgegriffenen Spannungen werden dem Eingang eines (nicht gezeigten) Operationsverstärkers zugeführt.

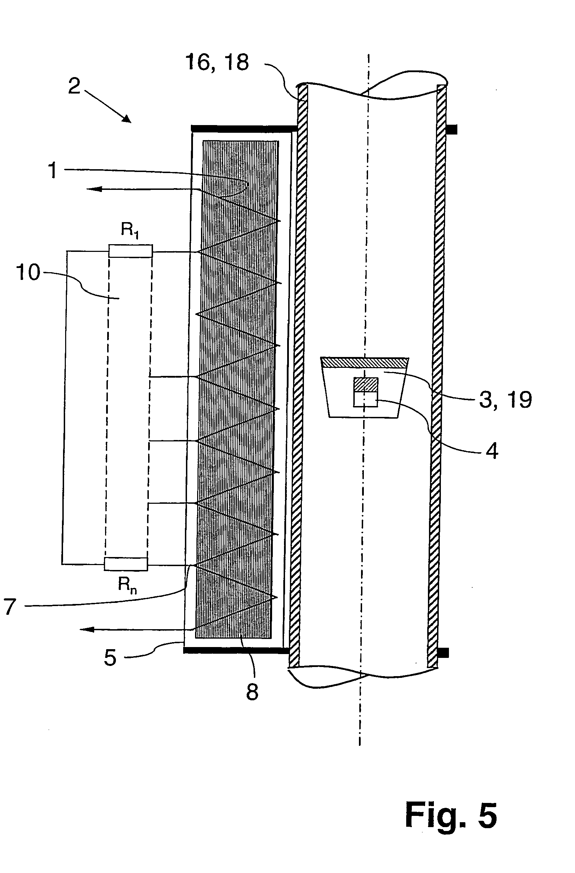

Fig. 5 zeigt in einer schematischen Darstellung ein Ausführungsbeispiel eines Wegmesssystems, bei dem der Sensor 2 seitlich an einem sich in Längsrichtung der Messspule 1 erstreckenden Träger 18 angeordnet ist. Der Träger 18 ist als Rohr 16 ausgeführt. Das Messobjekt 3, das im Sinne eines Schwimmers 19 ausgeführt ist, ist innerhalb des Rohres 16 beispielsweise in Abhängigkeit eines Flüssigkeitsstandes im Rohr 16 bewegbar. Das Rohr 16 kann dabei beispielsweise aus Plastik, Glas, Keramik oder Aluminium hergestellt sein. Der Spannungsabgriff 7 erfolgt - wie bereits im Zusammenhang mit Fig. 1 beschrieben - wiederum über ein Netzwerk 10 mit Widerständen R₁ ... Rₙ.

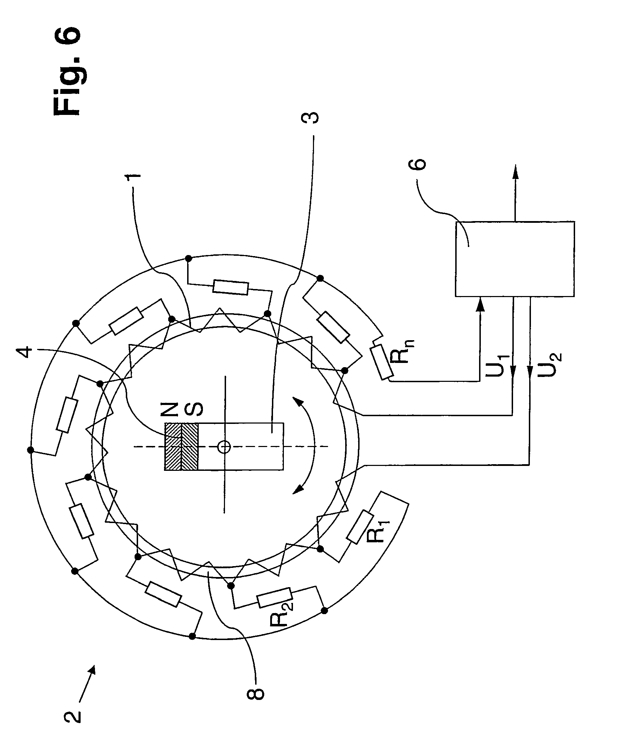

Fig. 6 zeigt schließlich den schematischen Aufbau eines Wegmesssystems zur Erfassung von rotatorischen Bewegungen eines Messobjekts 3 mit eingebautem Permanentmagneten 4. Der Kern 8 ist ringförmig ausgeführt und aus Streifen aus weichmagnetischem Material gebildet. Um den ringförmigen Kern 8 herum ist die Messspule 1 gewickelt, welche jeweils über die Widerstände R₁ bis Rₙ insgesamt n-Spannungsabgriffe 7 aufweist. Die Auswerteelektronik 6 umfasst einen Oszillator (nicht dargestellt), mit dem die Messspule 1 - wie oben bereits erläutert - mit zwei komplementären Spannungen U₁ und U₂ gespeist wird. Die abgegriffenen Spannungen werden mit Hilfe eines Operationsverstärkers (ebenfalls nicht dargestellt) ausgewertet, und am Ausgang des Operationsverstärkers wird ein Ausgangssignal bereitgestellt, das linear mit der Position des Messobjekts 3 variiert.

Bei Anwendungen, bei denen das Messobjekt 3 gegen den Kern 8 eine gute Führung hat, kann der Kern 8 aus Plastoferrit hergestellt sein. Dies hat den Vorteil, dass für die Spannung, mit der die Messspule gespeist wird, höhere Trägerfrequenzen verwendet werden können (beispielsweise im Bereich von 100 kHz), was eine hohe Dynamik-Bandbreite des Wegmesssystems zur Folge hat.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Berührungslos arbeitendes Wegmesssystem mit einem mit Wechselstrom beaufschlagbaren, eine Messspule (1) aufweisenden Sensor (2), einem dem Sensor (2) zugeordneten Messobjekt (3), welches als Permanentmagnet (4) ausgeführt ist und sich berührungslos entlang der in einem Spulengehäuse (5) gekapselten Messspule (1) bewegt, und einer mit dem Sensor (2) verbundenen Auswerteelektronik (6),
**dadurch gekennzeichnet, dass** die Messspule (1) mindestens zwei Spannungsabgriffe (7) aufweist und einen Kern (8) umfasst, welcher in einem wirksamen Bereich zwischen den Spannungsabgriffen (7) lokal in Sättigung gebracht werden kann.

2. Wegmesssystem nach Anspruch 1, **dadurch gekennzeichnet, dass** der Kern (8) aus einem Kunststoff gebundenen ferromagnetischen Material, z.B. Plastoferrit, oder
aus einem weichmagnetischen kristallinen Material, z.B. µ-Metall oder
in mehreren Streifen aus anisotropem oder nanokristallinem Material hergestellt ist.

3. Wegmesssystem nach Anspruch 1 oder 2, **dadurch gekennzeichnet, dass** der Permanentmagnet (4) als Stabmagnet oder
als Ring ausgeführt ist.

4. Wegmesssystem nach einem der Ansprüche 1 bis 3, **dadurch gekennzeichnet, dass** das Spulengehäuse (5) aus einem leitfähigen, nicht ferromagnetischen Material oder
aus Aluminium oder
aus Kunststoff hergestellt ist.

5. Wegmesssystem nach einem der Ansprüche 1 bis 4, **dadurch gekennzeichnet, dass** die Wandstärke des Spulengehäuses (5) größer ist als die Eindringtiefe des Wirbelstroms im Material.

6. Wegmesssystem nach einem der Ansprüche 1 bis 5, **dadurch gekennzeichnet, dass** der Permanentmagnet (4) eine maximal dem Abstand zwischen zwei benachbarten Spannungsabgriffen (7) entsprechende Breite aufweist.

7. Wegmesssystem nach einem der Ansprüche 1 bis 6, **dadurch gekennzeichnet, dass** die Messspule (1) von zwei komplementären Spannungen gespeist wird.

8. Wegmesssystem nach einem der Ansprüche 1 bis 7, **dadurch gekennzeichnet, dass** der Kern (8) als mit mehreren Streifen (17) aus weichmagnetischem Material umwickeltes Rohr (16) ausgeführt ist, wobei
das Messobjekt (3) im Inneren des Rohres (16) angeordnet sein kann.

9. Wegmesssystem nach einem der Ansprüche 1 bis 8, **dadurch gekennzeichnet, dass** der Sensor (2) an der Außenwand eines Rohres (16) entlang dessen Längsrichtung angeordnet ist.

10. Wegmesssystem nach Anspruch 8 oder 9, **dadurch gekennzeichnet, dass** das Messobjekt (3) im Inneren des Rohres (16) als Schwimmer (19) ausgeführt ist

11. Wegmesssystem nach einem der Ansprüche 1 bis 10, **dadurch gekennzeichnet, dass** der Kern (8) ringförmig ausgeführt ist.

## Claims

1. Contactless displacement measuring system with a sensor (2) to which alternating current can be applied and which has a measuring coil (1), a measuring object (3) which is associated with the sensor (2), is formed as a permanent magnet (4) and moves in a contactless manner along the measuring coil (1) encapsulated in a coil housing (5), and an electronic evaluation unit (6) connected to the sensor (2),
**characterised in that** the measuring coil (1) has at least two voltage taps (7) and comprises a core (8) which can be brought locally to saturation in an active area between the voltage taps (7).

2. Displacement measuring system according to Claim 1, **characterised in that** the core (8) is made of a plastics-bonded ferromagnetic material, e.g. plastoferrite, or
of a soft magnetic crystalline material, e.g. µ-metal or, in a plurality of strips of anisotropic or nanocrystalline material.

3. Displacement measuring system according to Claim 1 or 2, **characterised in that** the permanent magnet (4) is formed as a bar magnet or
as a ring.

4. Displacement measuring system according to any one of Claims 1 to 3, **characterised in that** the coil housing (5) is made of a conductive, non-ferromagnetic material or
of aluminium or
of plastics material.

5. Displacement measuring system according to any one of Claims 1 to 4, **characterised in that** the wall thickness of the coil housing (5) is greater than the depth of penetration of the eddy current in the material.

6. Displacement measuring system according to any one of Claims 1 to 5, **characterised in that** the permanent magnet (4) is of a width which corresponds at most to the distance between two adjacent voltage taps (7).

7. Displacement measuring system according to any one of Claims 1 to 6, **characterised in that** the measuring coil (1) is fed by two complementary voltages.

8. Displacement measuring system according to any one of Claims 1 to 7, **characterised in that** the core (8) is formed as a tube (16) which is wrapped with a plurality of strips (17) of soft magnetic material, wherein
the measuring object (3) can be disposed in the interior of the tube (16).

9. Displacement measuring system according to any one of Claims 1 to 8, **characterised in that** the sensor (2) is disposed at the outer wall of a tube (16) along the longitudinal direction thereof.

10. Displacement measuring system according to Claim 8 or 9, **characterised in that** the measuring object (3) is formed in the interior of the tube (16) as a float (19).

11. Displacement measuring system according to any one of Claims 1 to 10, **characterised in that** the core (8) is of annular formation.

## Revendications

1. Système de mesure de déplacement travaillant sans contact avec un capteur (2) présentant une bobine de mesure (1) et pouvant être soumis à l'action d'un courant alternatif, un objet de mesure (3) adjoint au capteur (2), qui est réalisé sous la forme d'un aimant permanent (4) et se déplace sans contact le long de la bobine de mesure (1) encapsulée dans un carter de bobine (5), et une électronique d'évaluation (6) reliée au capteur (2),
**caractérisé par le fait que** la bobine de mesure (1) présente au moins deux prises de tension (7) et un noyau (8) qui peut être amené localement en saturation dans une zone active entre les prises de tension (7).

2. Système de mesure selon la revendication 1, **caractérisé par le fait que** le noyau (8) est fabriqué en un matériau ferromagnétique lié par une matière synthétique, par exemple une plastoferrite, ou
en un matériau cristallin magnétique doux, par exemple un µ-métal ou
en plusieurs bandes en un matériau anisotrope ou nanocristallin.

3. Système de mesure de déplacement selon la revendication 1 ou 2, **caractérisé par le fait que** l'aimant permanent (4) est réalisé sous la forme d'un aimant droit ou
d'une bague.

4. Système de mesure de déplacement selon l'une des revendications 1 à 3, **caractérisé par le fait que** le carter de bobine (5) est fabriqué en un matériau conducteur non ferromagnétique ou
en aluminium ou
en matière synthétique.

5. Système de mesure de déplacement selon l'une des revendications 1 à 4, **caractérisé par le fait que** l'épaisseur de paroi du carter de bobine (5) est plus grande que la profondeur de pénétration des courants de Foucault dans le matériau.

6. Système de mesure de déplacement selon l'une des revendications 1 à 5, **caractérisé par le fait que** l'aimant permanent (4) présente une largeur correspondant au maximum à la distance entre deux prises de tension (7) adjacentes.

7. Système de mesure de déplacement selon l'une des revendications 1 à 6, **caractérisé par le fait que** la bobine de mesure (1) est alimentée par deux tensions complémentaires.

8. Système de mesure de déplacement selon l'une des revendications 1 à 7, **caractérisé par le fait que** le noyau (8) est réalisé sous la forme d'un tube (16) enrobé par plusieurs couches (17) d'un matériau magnétique doux,
l'objet de mesure (3) pouvant être disposé dans l'intérieur du tube (16).

9. Système de mesure de déplacement selon l'une des revendications 1 à 8, **caractérisé par le fait que** le capteur (2) est disposé sur la paroi extérieure d'un tube (16) le long de sa direction longitudinale.

10. Système de mesure de déplacement selon la revendication 8 ou 9, **caractérisé par le fait que** l'objet de mesure (3) est réalisé sous la forme d'un flotteur (19) dans l'intérieur du tube (16).

11. Système de mesure de déplacement selon l'une des revendications 1 à 10, **caractérisé par le fait que** le noyau (8) est réalisé de forme annulaire.
